Europäisches Patentamt

European Patent Office  (11) Numéro de publication: **0 071 536**
**B1**
Office européen des brevets

(19)

(12) **FASCICULE DE BREVET EUROPEEN**

(45) Date de publication du fascicule du brevet:     (51) Int. Cl.⁴: **G 21 C 5/00**, B 63 C 7/16,
**29.10.86**     **B 23 B 39/20**

(21) Numéro de dépôt: **82401417.9**

(22) Date de dépôt: **29.07.82**

(54) **Dispositif d'élimination d'espaces de fuite entre les cloisons entourant le coeur d'un réacteur nucléaire à eau sous pression.**

(30) Priorité: **30.07.81 FR 8114899**

(43) Date de publication de la demande:
**09.02.83 Bulletin 83/6**

(45) Mention de la délivrance du brevet:
**29.10.86 Bulletin 86/44**

(84) Etats contractants désignés:
**BE CH DE FR LI SE**

(56) Documents cités:
**DE - B - 1 302 431**
**FR - A - 2 230 444**
**FR - A - 2 250 302**
**FR - A - 2 333 324**
**US - A - 3 831 387**
**US - A - 3 933 390**

(73) Titulaire: **FRAMATOME ET CIE., Tour Fiat 1, Place de la Coupole, F-92400 Courbevole (FR)**

(72) Inventeur: **Cousseau, Jean, 1 rue Gossec, F-75012 Paris (FR)**

(74) Mandataire: **Lavoix, Jean et al, c/o Cabinet Lavoix 2, Place D'Estienne D'Orves, F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention concerne un dispositif d'élimination d'esoaces de fuite entre les cloisons entourant le cœur d'un réacteur nucléaire à eau sous pression, après la mise en fonctionnement de ce réacteur nucléaire.

Dans les réacteurs nucléaires à eau sous pression, le cœur du réacteur est constitué par des assemblages combustibles de grande longueur à section carrée constitués par un faisceau de crayons renfermant le matériau combustible et disposés côte à côte verticalement et en contact par leurs faces latérales.

La section transversale du cœur constituée par la juxtaposition des sections carrées des différents assemblages a la forme d'un polygone irrégulier dont le périmètre présente de nombreux redans.

L'ensemble du cœur du réacteur est maintenu à l'intérieur d'un cloisonnement, en contact avec les faces des assemblages périphériques dirigées vers l'extérieur, sur toute la hauteur de ces assemblages.

Le cœur et son cloisonnement sont d'autre part entourés par une virole cylindrique, appelée enveloppe de cœur, qui ménage entre le cloisonnement et sa surface interne un espace à l'intérieur duquel sont placées des plaques de renfort horizontales assurant l'assemblage et le maintien en place du cloisonnement lui-même constitué par des plaques planes ayant une longueur voisine de la hauteur du cœur.

Les plaques de renfort sont percées d'ouvertures permettant la circulation d'eau de refroidissement dans l'espace existant entre le cloisonnement et l'enveloppe de cœur.

En effet, il est nécessaire de refroidir le cloisonnement par une circulation d'eau sur sa surface externe et cette eau de refroidissement peut être introduite à la partie supérieure de cet espace par des orifices d'entrée d'eau ménagés dans l'enveloppe de cœur.

L'eau sous pression de refroidissement du réacteur, en circulation, pénètre dans le cœur par sa partie inférieure, traverse les assemblages verticalement de bas en haut et est recueillie par les branches chaudes du circuit primaire à la partie supérieure du cœur. L'eau de refroidissement du cloisonnement, en revanche, parcourt l'espace compris entre le cloisonnement et l'enveloppe de cœur, verticalement et de haut en bas avant de se mélanger avec l'eau pénétrant dans le cœur à la partie inférieure de celui-ci. La perte de charge de l'eau sous pression lors de son parcours à l'intérieur des assemblages, suivant la hauteur du cœur, entraîne l'existence d'une différence de pression, à la partie supérieure du cœur et l'eau de refroidissement du cloisonnement. Cette différence de pression, dans le cas d'un refroidissement du cloisonnement par courant descendant, est de l'ordre de $2 \times 10^5$ Pa.

Les plaques verticales constituant le cloisonnement sont simplement juxtaposées et assemblées à angle droit par des vis.

Dans certains réacteurs nucléaires à eau sous pression actuellement en fonctionnement, les assemblages entre certaines cloisons ne comportent qu'un nombre de vis réduit, si bien qu'il peut subsister un espace de fuite entre les éléments de cloisonnement correspondants.

A cause de la différence de pression existant, au moins à la partie supérieure du cloisonnement, entre la zone du cœur et la zone périphérique comprise entre le cloisonnement et l'enveloppe de cœur, des jets d'eau sous pression dirigés depuis l'extérieur vers l'intérieur du cœur créent des zones de turbulence dans les assemblages voisins et sont la cause de vibrations des crayons adjacents à ces zones de fuite qui peuvent entraîner à la longue leur détérioration.

Pour pallier cet inconvénient, on a été amené à réduire les espaces de fuite entre de telles cloisons, à l'intérieur des réacteurs nucléaires, par martelage des joints entre cloisons responsables de ces phénomènes.

Une telle opération de martelage doit être effectuée pendant un arrêt du réacteur, sous eau, avec un outillage spécial puisque les matériaux du réacteur sont contaminés après exploitation de ce réacteur. Préalablement à l'opération de martelage, il faut repérer les joints présentant un jeu trop important puis vérifier après martelage que le jeu a une valeur suffisamment faible pour éliminer pratiquement le phénomène de jet sous pression à travers le cloisonnement.

Ces opérations sont donc relativement complexes et prennent une longue durée. De plus, lorsque le réacteur est en service, les joints peuvent à nouveau se déplacer si bien que le phénomène de jet sous pression peut très bien réapparaître un certain temps après l'opération de martelage.

D'autre part, il n'est pas possible d'envisager un procédé de jonction des cloisons faisant intervenir un usinage de ces cloisons sous eau, avec enlèvement de copeaux, par exemple pour la mise en place de vis dans des trous taraudés, au niveau des arêtes de jonction des cloisons. En effet, on ne disposait pas jusqu'ici d'outillage permettant d'effectuer ces usinages et la mise en place de vis sans introduire des particules métalliques dans la cuve du réacteur et sans risque de chute d'éléments de l'outillage ou d'éléments de jonction dans cette cuve.

Le but de l'invention est donc de proposer un dispositif d'élimination d'espaces de fuite entre les cloisons entourant le cœur d'un réacteur nucléaire à eau sous pression, après la mise en fonctionnement de ce réacteur, ces cloisons planes et verticales se raccordant à angle droit et étant assemblées par des renforts horizontaux, ce dispositif permettant d'éliminer les espaces de fuite sans déformer les cloisons et de façon durable, par vissage des cloisons.

Dans ce but, le dispositif est constitué par:
— un mât vertical relié à des moyens permettant son déplacement dans le volume intérieur du cloisonnement rempli d'eau, après déchargement des assemblages du cœur, et muni de dispositifs pour sa mise en place en position de travail au voisinage d'une arête de jonction entre deux cloisons,

– un plateau monté mobile sur le mât, dans la direction verticale pour son déplacement le long de l'arête de jonction des cloisons,

– un boîtier monté mobile sur le plateau dans deux directions horizontales perpendiculaires, et comportant une face antérieure percée d'une ouverture entourée par une butée pour la mise en appui étanche du boîtier sur les cloisons au voisinage de l'arête de jonction de ces cloisons,

– un barillet monté mobile en rotation à l'intérieur du boîtier, autour d'un axe perpendiculaire à sa face avant, muni de moyens pour sa mise en position par rotation autour de son axe et son blocage en position fixe,

– un ensemble d'outils pour le perçage, le taraudage, le vissage des cloisons et pour le nettoyage du trou taraudé, portés par le barillet et venant successivement en position de service en face de l'ouverture du boîtier par rotation du barillet,

– un vérin d'entraînement des outils dans la direction axiale du barillet solidaire du boîtier et comportant une tige venant en prise avec les outils en position de service,

– un moteur hydraulique d'entraînement des outils en rotation solidaire du boîtier,

– et un magasin renfermant des vis à expansion dont la partie de sortie débouche dans un chargeur muni d'un vérin pour l'introduction par poussée des vis à l'intérieur du boîtier, dans un tube solidaire du barillet, à l'intérieur duquel se déplace l'outil de vissage.

Afin de bien faire comprendre l'invention, on va maintenant décrire le cloisonnement du cœur d'un réacteur nucléaire à eau sous pression d'un type susceptible de présenter des espaces de fuite et un dispositif permettant l'élimination des espaces de fuite dans ce cloisonnement, ainsi qu'une opération d'élimination des espaces de fuite du cloisonnement en utilisant le dispositif décrit.

La figure 1 est une vue en coupe par un plan horizontal du cloisonnement du cœur du réacteur.

La figure 2 est une vue en coupe par un plan vertical de ce cloisonnement.

La figure 3 est une vue agrandie du détail A de la figure 1.

Sur la figure 4, on voit le dispositif d'élimination des espaces de fuite maintenu en position de travail par son stand de supportage.

La figure 5 est une vue en coupe par un plan horizontal du dispositif d'élimination des espaces de fuite suivant l'invention, en position de travail au niveau d'une jonction du cloisonnement du réacteur.

La figure 6 est une vue en coupe suivant B de la figure 5.

La figure 7 est une section suivant C de la figure 5.

La figure 8 est une vue en coupe par un plan horizontal de la jonction entre les cloisons au niveau de la vis d'assemblage après expansion de celle-ci.

La figure 9 est une vue en coupe par un plan horizontal de la jonction au niveau de la vis d'assemblage, avant l'expansion de celle-ci.

La figure 10 est une vue en coupe par un plan horizontal au niveau d'une jonction du cloisonnement, pendant le perçage de celle-ci.

La figure 11 est une vue en coupe par un plan horizontal au niveau de la jonction, pendant l'opération d'élargissement du perçage dans la première cloison.

La figure 12 est une vue en coupe par un plan horizontal de la jocntion entre les cloisons pendant le taraudage du perçage, à l'intérieur de la seconde cloison.

La figure 13 est une vue en coupe de la jonction pendant l'opération de récupération des copeaux d'usinage.

La figure 14 est une vue en coupe de la jonction, pendant l'opération de mise en place de la vis de serrage.

La figure 15 est une vue en coupe par un plan horizontal, au niveau de la jonction, pendant l'opération d'expansion de la vis.

La figure 16 est une vue en coupe de la jonction entre les cloisons, avec une vis d'assemblage réalisée suivant une variante.

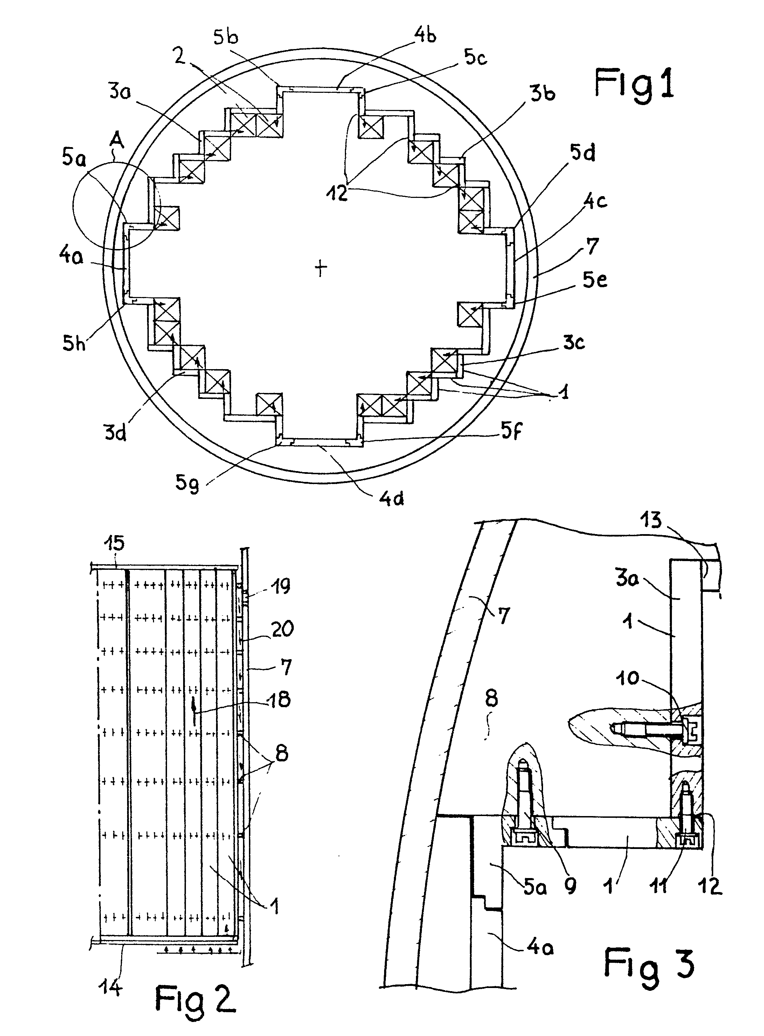

Sur les figures 1 et 2, on voit un cloisonnement constitué par des cloisons planes verticales 1 assemblées à angle droit et disposées de façon jointive par rapport aux faces latérales externes des assemblages périphériques 2 du cœur du réacteur.

Sur la figure 1 on voit que le cloisonnement est constitué de quatre parties à redans pré-assemblées 3a, 3b, 3c et 3d et de quatre parties planes 4a, 4b, 4c et 4d assemblées grâce à huit cornières 5a à 5h.

Le cloisonnement renfermant le cœur est lui-même entouré par l'enveloppe de cœur 7 constituée par une virole cylindrique ayant une hauteur supérieure à la hauteur du cœur.

On voit sur les figures 1 et 2 qu'entre les cloisons 1 et l'enveloppe de cœur 7 sont disposés des renforts horizontaux 8 dont l'espacement diminue depuis la partie basse jusqu'à la partie haute du cœur.

On voit sur la figure 3 que les cornières 5 sont fixées aux renforts 8 par des vis 9 et que les cloisons 1 sont elles-mêmes fixées sur ces renforts 8 par des vis 10.

Les cloisons 1 sont fixées entre elles à leurs jonctions à angle droit telles que 12 sur la figure 3, grâce à des vis 11 traversant l'une des cloisons sur toute son épaisseur et pénétrant et se vissant dans l'autre cloison suivant la direction de sa largeur.

Sur la figure 2, on voit que le cœur est limité à sa partie inférieure par la plaque inférieure de cœur 14 et à sa partie supérieure par la plaque supérieure de cœur 15. Ces plaques sont percées d'ouvertures permettant le passage de l'eau qui traverse le cœur suivant la direction et le sens de la flèche 18.

A la partie supérieure de l'enveloppe de cœur 7 des ouvertures 19 permettent le passage de l'eau remplissant la cuve du réacteur, à l'intérieur de l'espace compris entre le cloisonnement et l'enveloppe de cœur, cette eau parcourant verticalement ces espace, suivant la direction des flèches 20.

A la partie supérieure du cloisonnement, la différence de pression entre la zone interne de ce cloisonnement et la zone externe constituant l'espace où circule l'eau de refroidissement du cloisonnement suivant la direction des flèches 20, est maximum et a une valeur voisine de $2 \times 10^5$ Pa. Dans le cas d'un réacteur nucléaire comportant un cloisonnement dont les jonctions 12 ne comportent qu'un faible nombre de vis 11, dans la partie supérieure du cloisonnement, des jets d'eau sous pression passent par ces jonctions 12 et peuvent créer des vibrations dans les crayons disposés à l'extérieur des assemblages périphériques 2 du cœur disposés au voisinage de ces jonctions 12.

Les jonctions telles que 13 ne présentent pas cet inconvénient puisque les joints 13 ont tendance à se refermer sous l'effet de la pression et que les jets sous pression susceptibles de passer dans ces joints sont dirigés tangentiellement par rapport aux crayons de l'assemblage voisin.

L'élimination des espaces de fuite suivant l'invention s'applique donc essentiellement à la fermeture des espaces de fuite au niveau des jonctions 12, dans le cas des réacteurs nucléaires en fonctionnement comportant un faible nombre de vis au niveau de ces jonctions 12.

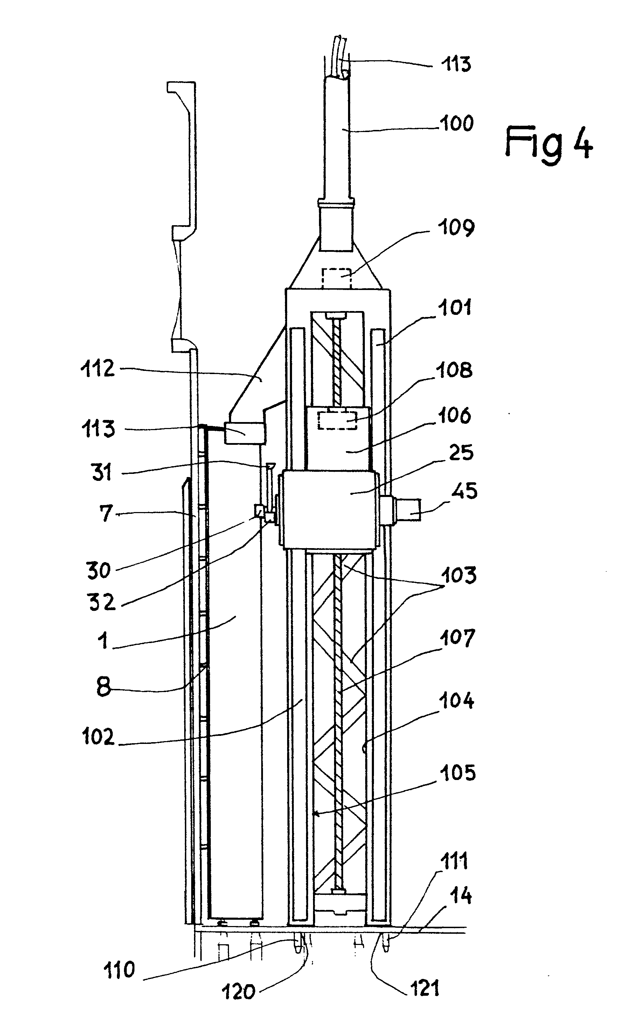

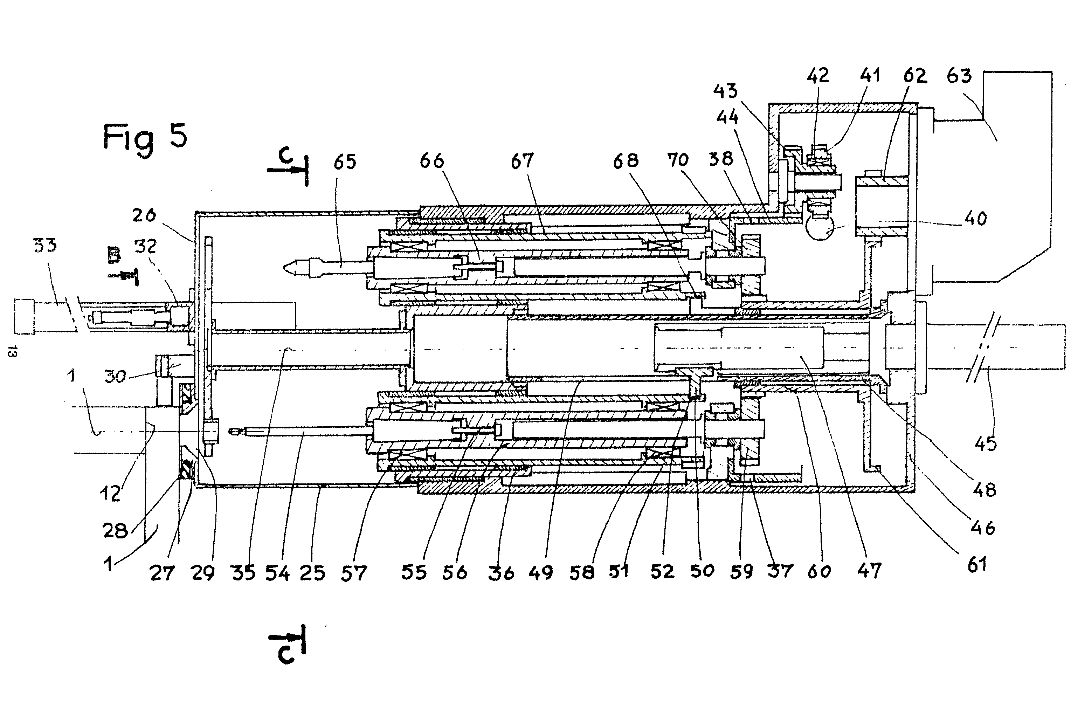

Sur les figures 4 et 5, on voit un dispositif permettant l'élimination des espaces de fuite au niveau d'une jonction 12, entre deux cloisons 1, le cœur du réacteur étant sous eau, pendant une période d'arrêt du réacteur.

Le stand de support du dispositif, représenté figure 4, comporte un mât 100 relié à sa partie inférieure à deux poutres 101 et 102, elles-mêmes entretoisées par des tirants 102. Les faces 104 et 105 de ces poutres constituent un chemin de roulement pour un plateau mobile 106 dont le mouvement vertical peut être obtenu par action de la vis 107 et de l'écrou 108. La rotation de la vis est commandée par le moteur 109.

Le boîtier 25 du dispositif est rendu solidaire du plateau 106 par un rail non représenté, lui permettant de se déplacer suivant deux directions horizontales perpendiculaires, ces déplacements étant commandés par des vérins. Les poutres 101 et 102 comportent chacune un téton 110 et 111 qui, en service, sont engagés dans des alésages 120, 121 correspondants de la plaque inférieure de cœur 14. Le stand de support comporte aussi un bras 112 muni d'un étrier 113 venant en appui sur le bord supérieur de la cloison 1. Le mât 100 est creux et sert de conduit de guidage aux différents câbles 113 d'alimentation et de commande du dispositif. Le mât 100 est fixé à sa partie supérieure à un palan non représenté fixé sur un chariot placé au-dessus de la piscine du réacteur qui est susceptible de se déplacer dans les deux directions du plan horizontal.

D'une manière connue et non représentée, ce dispositif comporte également une caméra de télévision permettant de repérer les jonctions du cloisonnement sur lesquelles on opère et de contrôler la mise en place du dispositif au niveau de ces jonctions.

Le dispositif a été représenté sur la figure 5, en position de travail au niveau de la jonction 12.

En se référant aux figures 4, 5 et 6, on voit que le dispositif d'élimination des espaces de fuite est constitué par un boîtier 25 portant sur sa face avant 26 une butée axiale 27 munie d'un dispositif d'étanchéité 28 au niveau d'une ouverture 29 permettant le raccord étanche de ce boîtier avec la cloison 1 parallèle au raccord 12.

La face 26 du boîtier porte également une butée latérale réglable 30 et un magasin vertical de vis à expansion 31 dont la partie basse constitue un dispositif de chargement 32 des vis à l'intérieur du boîtier.

Sur le chargeur 32 est fixé un vérin hydraulique 33 permettant de pousser les vis dans le boîtier, pour leur chargement.

A l'intérieur du boîtier 25 est monté rotatif autour de l'axe horizontal 35 du boîtier, un barillet 36 à six positions, portant six outils différents permettant de réaliser les opérations successives pour la fermeture de la jonction 12.

Sur la partie arrière du barillet sont usinés six trous tels que 37 et 38 correspondant chacun à la position d'un outil et disposés à 60° si l'on considère la rotation du barillet autour de l'axe 35.

Un doigt à ressort disposé sur une des faces latérales du boîtier 25 et commandé dans le sens de son retrait par un vérin et dans l'autre sens par le ressort permet, lorsqu'il est introduit dans une des ouvertures telles que 37 et 38, de fixer le barillet en position angulaire pour effectuer l'une des opérations au niveau de la jonction 12.

Le mouvement angulaire du barillet est commandé par une crémaillère 40 solidaire de la tige d'un vérin hydraulique pour le déplacement en translation de cette crémaillère 40 qui entraîne un engrenage 41 monté par l'intermédiaire d'une roue libre 42 sur un engrenage 43 entraînant lui-même une couronne dentée 44 usinée sur la partie arrière du barillet 36. Le fonctionnement de la roue libre 42 permet l'entraînement de l'engrenage 43 et du barillet à partir du mouvement de la crémaillère dans un sens alors que cet entraînement ne se fait pas pour le déplacement de la tige du vérin et de la crémaillère 40 dans l'autre sens. La longueur de la crémaillère 40 permet de faire effectuer un tour complet au barillet grâce au mouvement du vérin dans un sens.

La face arrière 46 du boîtier porte un vérin hydraulique 45 dont la tige est solidaire d'un poussoir 47 mobile à l'intérieur d'un cylindre de guidage 48 comportant une lumière 49 sur une partie de sa longueur. Le poussoir 47 porte un ergot 50 se déplaçant à l'intérieur de la lumière 49. Sur la figure 4, l'ergot 50 a été représenté en position arrière et, dans cette position, les fourreaux tels que 51, de certains outillages portés par le barillet 36, en position de travail dans le boîtier viennent engager une ouverture 52 sur l'ergot 50 de sorte que le déplacement du fourreau et de l'outil qu'il renferme peut être réalisé grâce au vérin 45. Ainsi le vérin 45 peut servir à l'avance et au retrait des outils de perçage portés par le barillet.

Sur la figure 5 ont été représentés deux outils de perçage dont l'un est en position de travail à l'intérieur du boîtier. Cet outil de perçage est constitué par un foret double 54 comportant une partie avant pour le perçage d'un avant-trou et une partie arrière pour le perçage d'un trou dans les cloisons 1.

Ce foret 54 est fixé par l'intermédiaire d'une vis 55 à l'intérieur d'un porte-foret 56 monté rotatif à l'intérieur du fourreau 51 par l'intermédiaire de deux paliers à billes 57 et 58.

A sa partie arrière, le porte-foret 56 est solidaire d'un engrenage 59 engrenant avec une roue dentée 60 elle-même solidaire d'une seconde roue dentée 61 en prise avec un engrenage 62 entraîné par un moteur hydraulique 63 porté par la face arrière 46 du boîtier 25.

La mise en rotation du moteur hydraulique 63 permet ainsi de faire tourner le foret 54 pour le perçage des cloisons 1, lorsque le vérin hydraulique 45 d'avance est alimenté dans le sens du perçage.

Sur la figure 5, on voit également un second foret 65 permettant l'élargissement du trou percé par le foret 54, dans sa partie à l'intérieur de la première cloison.

Ce foret 65 est solidaire d'un porte-foret 66 monté rotatif à l'intérieur d'un fourreau 67 monté dans le barillet 36 et comportant une gorge 68 venant se mettre en place sur l'ergot 50, lorsque le foret 65 est amené en position de travail grâce à la rotation du barillet 36.

Le foret 65 est entraîné en rotation par la chaîne cinématique constituée par les couronnes 60 et 61 et l'engrenage 62 solidaire de l'arbre du moteur 63, par l'intermédiaire d'un engrenage 70.

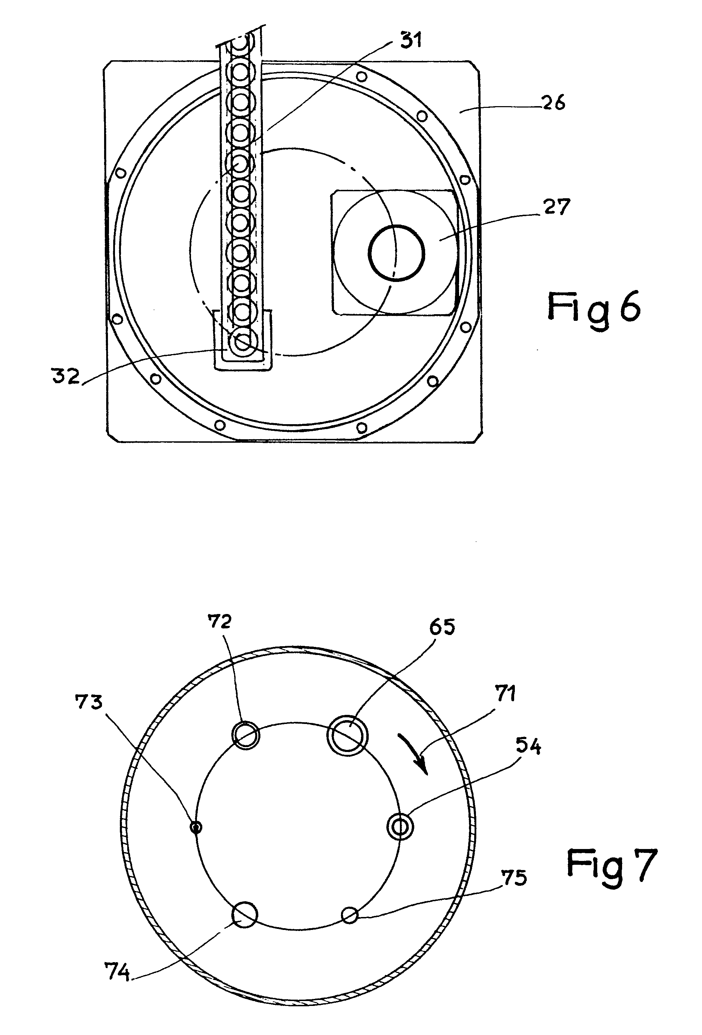

Sur la figure 7, on voit la position des différents outillages équipant le barillet. On a déjà décrit les forets 54 et 65 en se référant à la figure 5, ces deux outils étant disposés à 60° dans des positions successives sur le barillet si l'on considère le sens de rotation de celui-ci indiqué par la flèche 71.

Les autres outils portés par le barillet, tous disposés à 60° les uns des autres, sont constitués, dans l'ordre d'utilisation, par le taraud 72, un tube de nettoyage du trou après usinage 73, un tournevis de vissage et de blocage 74, et un poussoir de freinage de la vis 75.

Tous ces outils sont entraînés par le vérin 45 et/ou le moteur hydraulique 63 par l'intermédiaire d'organes d'entraînement similaires à ceux qui ont été décrits pour les forets 54 et 65.

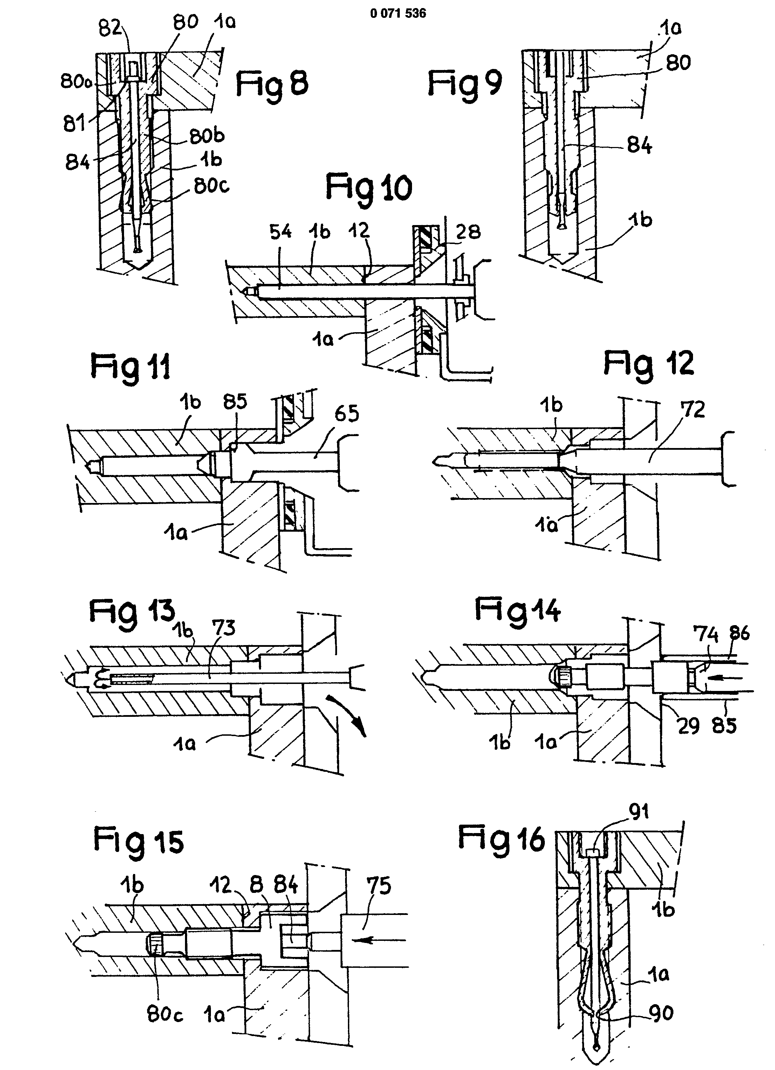

Sur les figures 8 et 9, on voit une vis 80 d'assemblage des cloisons 1a et 1b, cette vis comportant une tête 80a à l'intérieur de laquelle est prévue une ouverture 82 à section hexagonale et se terminant par un épaulement 81 destiné à venir en appui sur la surface terminale de l'élargissement du trou dans la plaque 1a, une partie médiane 80b comportant le filetage de la vis et une partie terminale 80c à expansion radiale. Cette partie 80c est constituée par quatre secteurs qui peuvent être écartés par une tige de commande 84 disposée dans un perçage central traversant toute la vis.

Sur la figure 8, la tige 84 est en position de blocage de la vis alors que sur la figure 9 la tige centrale 84 est dans sa position avant blocage de la vis.

On va maintenant se référer aux figures 10 à 15 pour décrire une opération complète de fixation d'une vis dans les cloisons 1a et 1b entre lesquelles subsiste un espace de fuite 12.

En début d'opération, on fait descendre l'outillage dans la cuve par le palan auquel est accroché le mât 100 de façon à ce que les tétons 110 et 111 viennent s'engager dans les alésages 120 et 121 et que l'étrier 113 s'appuie sur la plaque 1.

En actionnant le moteur 109, on positionne l'outillage en hauteur au niveau voulu de la jonction des cloisons 1a et 1b qui ont été préalablement repérées. Le repérage peut se faire en introduisant des cales d'épaisseur dans les différentes jonctions entre les cloisons pour déterminer celles qui présentent un espace de fuite à éliminer.

L'outillage est alors amené dans la position telle que représentée à la figure 10 par déplacement du boîtier 25 par rapport au plateau 106, grâce aux vérins permettant le déplacement du boîtier dans la direction de l'axe 35 du barillet et dans la direction horizontale perpendiculaire.

Le foret 54 est alors amené en position de travail par rotation du barillet puis mis en fonctionnement grâce au moteur hydraulique 63 et au vérin 45, pour réaliser le perçage de la cloison 1a sur toute son épaisseur et de la cloison 1b sur une certaine longueur dans la direction de sa largeur, tel que représenté à la figure 9. Le foret 54 est alors remis en position arrière à l'intérieur du boîtier 25 avant que le foret 65 ne soit amené en position de travail par rotation du barillet de 60°. Pour chacune des positions du barillet, le doigt de blocage à ressort permet un maintien en position exact de l'outillage au centre de l'ouverture 29 du boîtier 25.

Ainsi qu'il est visible à la figure 11, le foret 65 permet d'élargir le trou à l'intérieur de la plaque 1a et de réaliser la surface d'appui 85 de la tête de vis.

Ainsi qu'il est visible sur la figure 12, le taraud 72 permet d'usiner le trou à l'intérieur de la plaque 1b sur une certaine longueur pour le vissage d'un élément de jonction tel que la vis 80.

Les forets 54 et 65 ainsi que le taraud 72 sont mis en rotation grâce au moteur hydraulique 63 et leur mouvement d'avance est réalisé grâce au vérin 45.

Sur la figure 13, on voit le tube de nettoyage 73 amené en position de travail grâce au vérin 45 à l'intérieur du perçage, son extrémité de sortie étant disposée au voisinage du fond du trou percé à l'intérieur de la plaque 1b.

Une alimentation en eau sous pression reliée au boîtier 25 permet d'envoyer à l'intérieur du trou par l'intermédiaire du tube de nettoyage 73 un jet d'eau sous pression qui entraîne les copeaux d'usinage des cloisons pour leur récupération à l'intérieur du boîtier qui est maintenu en légère dépression. En effet, il est nécessaire d'éviter que des particules métalliques ne restent dans la cuve du réacteur d'où elles pourraient être entraînées en tout point du circuit primaire lors de la remise en fonctionnement du réacteur. Pendant le perçage du trou grâce au foret 54, on a amené une vis 80 dans son tube de transport 86 visible à la figure 14. Ce tube de transport 86 est monté solidaire du barillet et le tournevis 74 coulisse grâce au vérin 45 à l'intérieur de ce tube 86. Lorsque le tube 86 et le tournevis 74 sont amenés en position de travail en face du trou 29 du bôitier 25 dans l'alignement du trou percé dans les cloisons, il suffit de pousser la vis grâce au tournevis 74 engagé dans l'ouverture de la tête de vis jusque dans sa position permettant de commencer son vissage à l'intérieur du trou de la cloison 1b. Le vissage est alros poursuivi par rotation du tournevis 74 jusqu'au moment où l'espace de fuite entre les deux cloisons au niveau de la vis 80 a été supprimé ou réduit de façon à éviter toute fuite d'eau sous pression.

On amène alors en position de travail le poussoir 75 tel que représenté à la figure 15.

Le vérin 45 agissant sur le poussoir 75 permet d'avancer la tige 84 dans sa position telle que représentée à la figure 8 où cette tige écarte les sections de la partie terminale 80c de la vis pour son blocage à l'intérieur du trou dans les cloisons 1a et 1b. La surface externe de la partie terminale 80c de la vis présente une denture permettant d'améliorer le blocage en position axiale de cette vis.

On peut ainsi éviter tout risque de dévissage de la vis 80 dans le réacteur nucléaire en fonctionnement, sans avoir à utiliser une opération de soudage pour le blocage de cette vis en rotation.

Lorsque l'ensemble des opérations relatives à la fixation d'une vis est terminé la tête d'uisnage se déplace par rapport au plateau mobile de façon à éloigner cet outillage des cloisons pour l'amener dans une nouvelle position verticale le long du stand permettant de réaliser l'usinage et la fixation d'une vis 80 à un autre endroit de la jonction entre les cloisons 1a et 1b.

On peut ainsi réaliser une élimination complète de l'espace de fuite entre ces cloisons en effectuant la mise en place de vis avec un certain espacement dans la direction verticale.

Lorsque l'opération est terminée pour la jonction entre les cloisons 1a et 1b, on déplace l'outillage vers une autre jonction entre deux autres cloisons pour laquelle on a repéré l'existence d'un espace de fuite.

Sur la figure 16, on a représenté une variante de réalisation de la vis de fixation des cloisons. L'extrémité de la tige 84' comporte une gorge 90 dans laquelle vient s'engager l'extrémité des secteurs constituant la partie terminale 80'c de la vis qui joue le rôle d'ergot de blocage axial de cette tige par rapport à la vis. De cette façon, il ne peut pas de produire de glissement entre la tige 84 et la vis 80.

L'extrémité supérieure de la tige 84 comporte également un élargissement 91 qui permet de retenir la tête de vis 80a même si une rupture de la vis se produit dans sa partie médiane 80b.

On voit que les principaux avantages du dispositif suivant l'invention sont de permettre une élimination définitive du jeu entre les cloisons du cœur d'un réacteur nucléaire ayant déjà fonctionné, puisque toutes les opérations peuvent être effectuées sous eau et à distance, sans introduire de particules métalliques à l'intérieur de la cuve du réacteur venant des opérations d'usinage des cloisons.

De plus, la fixation des vis sur les cloisons est extrêmement sûre et extrêmement efficace quant à l'élimination du jeu, si bien qu'il n'est plus nécessaire, après avoir réalisé cette opération, de vérifier les jonctions entre les cloisons du cœur.

Mais l'invention ne se limite pas au mode de réalisation qui a été décrit; elle en comporte au contraire toutes les variantes.

C'est ainsi qu'on peut imaginer des vis à expansion d'une fomre différente de celle qui a été décrite. On peut également imaginer l'utilisation d'un outillage pour le perçage des cloisons et pour la mise en place et le blocage de la vis différent d'un outillage à barillet. En outre, dans l'outillage à barillet tel que décrit, le nombre de positions de travail du barillet peut être différent de six et par exemple on peut utiliser un barillet à sept positions permettant de disposer de sept outils. Cette solution permet, par exemple, d'avoir deux tarauds.

Enfin, on peut imaginer l'utilisation du dispositif suivant l'invention dans le cas de tout réacteur nucléaire à eau sous pression ayant déjà fonctionné et dont les cloisons peuvent présenter des espaces de fuite.

**Revendications**

1. Dispositif d'élimination d'espaces de fuite entre les cloisons entourant le cœur d'un réacteur nucléaire à eau sous pression après la mise en fonctionnement de ce réacteur, ces cloisons planes et verticales de raccordement à angle droit étant assemblées par des renforts horizontaux, caractérisé par le fait qu'il est constitué par:

– un mât (100) vertical relié à des moyens permettant son déplacement dans le volume intérieur du cloisonnement rempli d'eau, après déchargement des assemblages du cœur, et muni de dispositifs (110, 111, 112) pour sa mise en place en position de travail, au voisinage d'une arête de jonction entre deux cloisons (1),

– un plateau (106) monté mobile sur le mât (100), dans la direction verticale pour son déplacement le long de l'arête de jonction des cloisons (1),

– un boîtier (25) monté mobile sur le plateau (106) dans deux directions horizontales perpendiculaires, et comportant une face antérieure (26) percée d'une ouverture (29) entourée par une butée (27) pour la mise en appui étanche du boîtier (25) sur les cloisons (1) au voisinage de l'arête de jonction des cloisons (1),

– un barillet (36) monté mobile en rotation à l'intérieur du boîtier, autour d'un axe perpendiculaire à sa face avant, muni de moyens (40, 41, 42, 43, 44) pour sa mise en position par rotation autour de son axe et son blocage en position fixe,

– un ensemble d'outils (54, 65, 72, 73, 74, 75) pour le perçage, le taraudage, le vissage des cloisons (1) et le nettoyage du trou taraudé, portés par le barillet (36) et venant successivement en position de service en face de l'ouverture (29) du boîtier (25) par rotation du barillet,

– un vérin d'entraînement (45) des outils dans la direction axiale du barillet solidaire du boîtier (25) et comportant une tige venant en prise avec les outils en position de service,

– un moteur hydraulique (63) d'entraînement des outils en rotation solidaire du boîtier (25),

– et un magasin (31) renfermant des vis à expansion dont la partie de sortie débouche dans un chargeur (32) muni d'un vérin (33) pour l'introduction par poussée des vis à l'intérieur du boîtier (25), dans un tube (86) solidaire du barillet, à l'intérieur duquel se déplace l'outil de vissage (74).

2. Dispositif d'élimination d'espaces de fuite suivant la revendication 1, caractérisé par le fait que la face avant (26) du boîtier (25) comporte, en plus de la butée d'appui (27) qui est munie d'un joint (28), une butée latérale réglable (30) de positionnement du boîtier sur l'arête des cloisons (1).

3. Dispositif d'élimination d'espaces de fuite suivant l'une des revendications 1 et 2, caractérisé par le fait que le barillet (36) porte six outils disposés à 60° si l'on considère la rotation de ce barillet autour de son axe, ces outils étant successivement un premier foret (54) permettant le perçage des cloisons (1), un second foret (65) permettant l'élargissement du trou, à l'intérieur d'une des cloisons, un outil de taraudage (72) du trou à l'intérieur de la seconde cloison, un tube (73) de nettoyage du trou d'alimentation en eau sous pression pour la récupération des copeaux à l'intérieur du boîtier (25), un tournevis (74) et un poussoir (75) d'expansion de la vis pour son blocage.

**Claims**

1. A device for eliminating leakage spaces between the partitions surrounding the core of a pressurized water nuclear reactor after this reactor has been put into operation, these planar and vertical partitions having a connection at a right angle being assembled by horizontal reinforcements, characterised in that it is constituted by:

– a vertical mast (100) connected to means for displacing it in the inner volume of the partitioning filled with water, after discharging assemblies of the core, and provided with devices (110, 111, 112) for placing it in a working position in the vicinity of an edge of a junction between two partitions (1),

– a plate (106) movably mounted on the mast (100) in the vertical direction for its displacement along the junction edge of the partitions (1),

– a housing (25) movably mounted on the plate (106) in two horizontal perpendicular directions, and comprising a front side (26) provided with an opening (29) surrounded by an abutment (27) for the sealed bearing of the housing (25) against the partitions (1) in the vicinity of the junction edge of the partitions (1),

– a barrel (36) mounted to be rotatable inside the housing about an axis perpendicular to its front side, provided with means (40, 41, 42, 43, 44) for putting it in position by rotation about its axis and its locking in a fixed position,

– a group of tools (54, 65, 72, 73, 74, 75) for drilling, tapping, screwing the partitions (1) and cleaning the tapped hole, carried by the barrel (36) and coming in succession in the operative position in facing relation to the opening (29) of the housing (25) by rotation of the barrel,

– a jack (45) for driving the tool in the axial direction of the barrel connected to the housing (25) and including a rod which engages with the tools in the operative position,

– a hydraulic motor (63) for driving the tools in rotation and connected to the housing (25),

– and a magazine (31) enclosing expansion screws whose outlet part opens onto a charger (32) provided with a jack (33) for introducing by means of a thrust screws inside the housing (21), in a tube (86) connected to the barrel, in which the screwing tool (74) moves.

2. A device for eliminating leakage spaces according to claim 1, characterised in that the front side (26) of the housing (25) comprises, in addition to the bearing abutment (27) which is provided with a sealing element (28), an adjustable lateral abutment (30) for positioning the housing on the edge of the partitions (1).

3. A device for eliminating leakage spaces according to one of the claims 1 and 2, characterised in that the barrel (36) carries six tools disposed at 60° from each other when considering the rotation of this barrel about its axis, these tools being in succession a first drill (54) for drilling the partitions (1), a second drill (55) for increasing the size of the hole, inside one of the partitions, a tool (72) for tapping the hole inside the second partition, a tube (73) for cleaning the pressurized water supply hole for recovering cuttings inside the housing (25), a screw-driver (74) and a thrust element (75) for expanding the screw for the locking thereof.

**Patentansprüche**

1. Vorrichtung zur Beseitigung von Leckagen zwischen den den Kern eines Druckwasserreaktors umgebenden Trennwänden nach der Inbetriebsetzung dieses Reaktors, wobei die ebenen, vertikalen und rechtwinkeligen anschliessenden Trennwände horizontale Verstärkungen aufweisen, dadurch gekennzeichnet, dass sie bestehen aus:

einem vertikalen Mast (100), der mit Mitteln verbunden ist, die seine Verschiebung im inneren Volumen des mit Wasser gefüllten Behälters nach Entnahme der Kerngruppen ermöglichen, und mit Einrichtungen (110, 111, 112) zu seiner Anbringung in Arbeitsstellung in der Nähe einer Verbindungskante der Trennwände (1),

einem Aufsatz (106), der in der Vertikalrichtung beweglich auf dem Mast (100) zu seiner Verschiebung längs der Verbindungskante der Trennwände (1) montiert ist,

einem Gehäuse (25), das auf dem Aufsatz (106) in zwei horizontalen, zueinander senkrechten Richtungen beweglich montiert ist und eine Vorderseite (26) aufweist, die von einer Öffnung (29) durchdrungen ist, die von einem Anschlag (27) zur dichten Anlage des Gehäuses (25) auf den Trennwänden (1) in der Nähe der Verbindungskante der Trennwände (1) umgeben ist,

einer Hülse (36), die drehbeweglich im Inneren des Gehäuses um eine zu seiner Vorderseite senkrechte Achse montiert ist, die mit Mitteln (40, 41, 42, 43, 44) zur Positionierung durch Drehung um ihre Achse und ihre Blockierung in fester Lage versehen ist,

einer Gruppe von Werkzeugen (54, 65, 72, 73, 74, 75) zum Bohren, Gewindeschneiden, Verschrauben der Trennwände (1) und zum Reinigen des gewindegeschnittenen Lochs, die von der Hülse (36) getragen werden und nacheinander durch Drehung der Hülse in Arbeitsstellung vor der Öffnung (29) des Gehäuses (25) kommen,

einer Kolben-Zylindereinheit (45) zum Antrieb der Werkzeuge in der Axialrichtung der Hülse, die einstückig mit dem Gehäuse (25) ist und eine in Eingriff mit den Werkzeugen in Arbeitsstellung kommende Stange aufweist,

einem hydraulischen Motor (63) zum Drehantrieb der Werkzeuge, der am Gehäuse (25) befestigt ist, und

einem Aufweitungsschrauben enthaltenden Magazin (31) besteht, dessen Ausgangsteil in einem Belader (32) mündet, der mit einer Kolben-Zylindereinheit (33) zum Einführen der Schrauben in das Innere des Gehäuses (25) in einem mit der Hülse starr verbundenen Rohr (86) versehen ist, innerhalb dessen sich das Verschraubungswerkzeug (74) verschiebt.

2. Vorrichtung zur Beseitigung von Leckagen nach Anspruch 1, dadurch gekennzeichnet, dass die Vorderseite (26) des Gehäuses (25) zusätzlich zu dem Anlagenanschlag (27), der mit einer Dichtung (28) versehen ist, einen seitlichen, regulierbaren Anschlag (30) zur Positionierung des Gehäuses auf der Kante der Trennwände (1) aufweist.

3. Vorrichtung zur Beseitigung von Leckagen nach einem der Ansprüche 1 und 2, dadurch gekennzeichnet, dass die Hülse (36) sechs unter je 60° angeordnete Werkzeuge, wenn man die Drehung dieser Hülse um ihre Achse betrachtet, trägt, welche Werkzeuge nacheinander aus einem ersten Bohrer (54), der das Durchbohren der Trennwände (1) ermöglicht, einem zweiten Bohrer (65), der die Erweiterung des Lochs im Inneren einer der Trennwände ermöglicht, einem Werkzeug (72) zum Gewindeschneiden in das Loch im Inneren der zweiten Trennwand, einem Rohr (73) zum Reinigen des Lochs mit Druckwasser für die Erfassung der Späne im Inneren des Gehäuses (25), einem Schraubendreher (74) und einem Stössel (75) zum Aufweiten der Schraube zwecks ihrer Verankerung sind.

Fig 1

Fig 2

Fig 3

Fig 4

Fig 5

0 071 536

Fig 6

Fig 7

Fig 8

Fig 9

Fig 10

Fig 11

Fig 12

Fig 13

Fig 14

Fig 15

Fig 16